## Europäisches Patentamt

## European Patent Office

## Office européen des brevets

(19)

(11) Veröffentlichungsnummer: **0 095 690**

**B1**

# (12) EUROPÄISCHE PATENTSCHRIFT

(45) Veröffentlichungstag der Patentschrift:
24.09.86

(21) Anmeldenummer: **83105057.0**

(22) Anmeldetag: **21.05.83**

(51) Int. Cl.⁴: **A 01 F  15/00**

(54) **Rundballenpresse mit einem einen Guteinlass aufweisenden Ballenpressraum.**

(30) Priorität: **28.05.82  US 382882**
**28.05.82  US 382885**
**28.05.82  US 382886**

(43) Veröffentlichungstag der Anmeldung:
**07.12.83 Patentblatt 83/49**

(45) Bekanntmachung des Hinweises auf die Patenterteilung:
**24.09.86 Patentblatt 86/39**

(84) Benannte Vertragsstaaten:
**DE FR GB IT SE**

(56) Entgegenhaltungen:
**Keine Entgegenhaltungen**

(73) Patentinhaber: **DEERE & COMPANY, 1 John Deere Road, Moline Illinois 61265 (US)**

(72) Erfinder: **Anstey, Henry Dennis, Rural Route 4, Box 188a, Ottumwa Iowa 52501 (US)**
Erfinder: **Soteropulos, Gust Steve, 345 E. Alta Vista, Ottumwa Iowa 52501 (US)**
Erfinder: **Meiers, Gerald Franklyn, 1014 Chester, Ottumwa Iowa 52501 (US)**

(74) Vertreter: **Feldmann, Bernhard, DEERE & COMPANY European Office, Patent Department Steubenstrasse 36- 42 Postfach 503, D-6800 Mannheim 1 (DE)**

EP 0 095 690 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung bezieht sich auf eine Rundballenpresse mit einem einen Guteinlaß aufweisenden Ballenpreßraum, der aus umlaufenden, über Walzen geführten endlosen Reimen gebildet wird, wobei Teile der Riemen beim Wickelvorgang mit dem in zylindrische Ballen zu formenden Gut in Berührung kommen.

Bei dieser Rundballenpresse (US-A-4 252 057) kann das Erntegut, beispielswiese das von dem zu bildenden Ballen abstehende Gut oder Gut, das Zwischen den Riemen hindurch in dem Ballenpreßraum benachbarte Kammern fällt, zwischen eine oder mehrere der drehenden Walzen und die darüberlaufenden Riemen gelangen und sich dort verwickeln, was letzlich zu Störungen des Preßvorgangs, ungeradem Riemenlauf, Verstopfungen und Riemenschäden führen kann.

Die mit der Erfindung zu lösende Aufgabe wird darin gesehen, das Umwickeln ganz oder zumindest weitgehend zu verhindern.

Diese Augabe ist Erfindungsgemäß dadurch gelöst worden, daß bei mindestens einer der die Reimen führenden Walzen die Seitenkanten der Riemen im Umlaufbereich um die Walzen einen Abstand zur Walzenoberfläche aufweisen.

Auf diese Weise kann zu pressendes Erntegut nicht zwischen den Riemen und der oder den Walzen festgehalten und mitgedreht werden, da das Erntegut gar nicht bis zur eigentlichen Berührungsfläche des Riemens mit der oder den Walzen vordringt.

In einer sehr einfachen, aber höchst wirksamen, wie auch dem guten Riemenlauf dienenden Weise wird der wickelfreie Lauf der Riemen dadurch erreicht, daß bei mindestens einer der die Riemen führenden Walzen die mit dem Gut in Berührung kommenden Teile der Riemen nur in ihrem Mittenbereich auf der Walze geführt sind.

Eine der möglichen wirtschaftlichen Ausführungen wird darin gesehen, daß mindestens eine der Walzen in ihrem den Mittenbereich der Riemen führenden Bereich einen größeren Durchmesser aufweist als zwischen den Seitenkanten benachbarter Riemen.

In kostengünstiger und auch der Wartung dienender Weise wird die entsprechende Vergrößerung des Walzendurchmessers dadurch erreicht, daß im Mittenbereich austauschbare Distanzhalter vorgesehen sind, die nach einem weiteren Merkmal der Erfindung als Büchsen ausgebildet sein können. Derartige Büchsen können erfindungsgemäß aus Gummi bestehen und darüber hinaus einen hohen Reibwert aufweisen, der es ermöglicht, einen guten Kraftschluß zwischen den Riemen und der die Büchsen tragenden Walze oder Walzen zu erzielen.

Hierdurch wird auch die Riemenlaufgenauigkeit in vorteilhafter Weise verbessert, so daß die Riemen zirka 80% bis 90 % oder mehr der Breite des Ballenpreßraums überdecken können. Bei Rundballenpressen, bei denen eine der die Riemen führende Walzen auch als Stützwalze für den größer werdenden Ballen ausgebildet ist, wird vorgeschlagen, daß die Distanzhalter auf dieser Walze angeordnet sind, weil das Gut bei dieser Walze am stärksten zum Wickeln neigt.

Eine optimale Wirkung wird dann erzielt, wenn alle oder der größte Teil der Walzen mit den entsprechenden Distanzhaltern versehen ist, wobei andererseits die Riemen derart in ihrem Querschnitt abgestuft sind, daß die Riemen in ihrem Mittenbereich eine größere Stärke als in ihrem Seitenbereich aufweisen.

In den Zeichnungen ist ein nachfolgend näher beschriebenes Ausführungsbeispiel einer Rundballenpresse mit den Merkmalen der Erfindung dargestellt. Es zeigt:

Fig. 1 eine Ansicht der rechten Seite der Rundballenpresse

Fig. 2 eine ähnliche Ansicht wie Fig. 1 mit offenem Ballenpreßraum und einem Ballen im Anfang seiner Wickelphase

Fig. 3 eine Teilansicht eines oberen Vorderteils der Rundballenpresse von Fig. 1

Fig. 4 eine Teilansicht eines unteren Vorderteils der Rundballenpresse von Fig. 1

Fig. 5 einen Schnitt nach der Linie 5 - 5 in Fig. 4

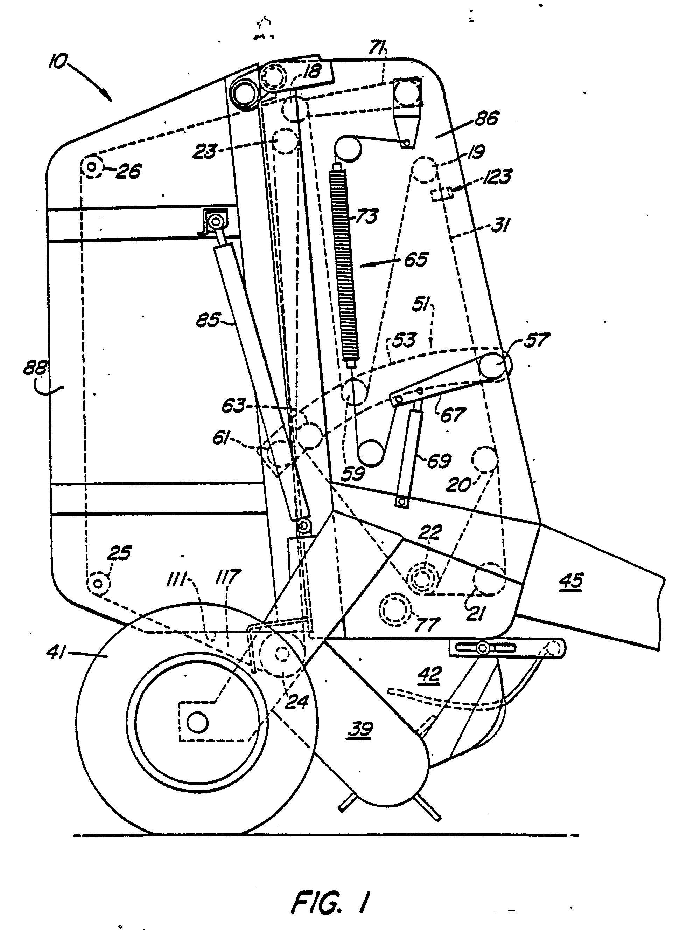

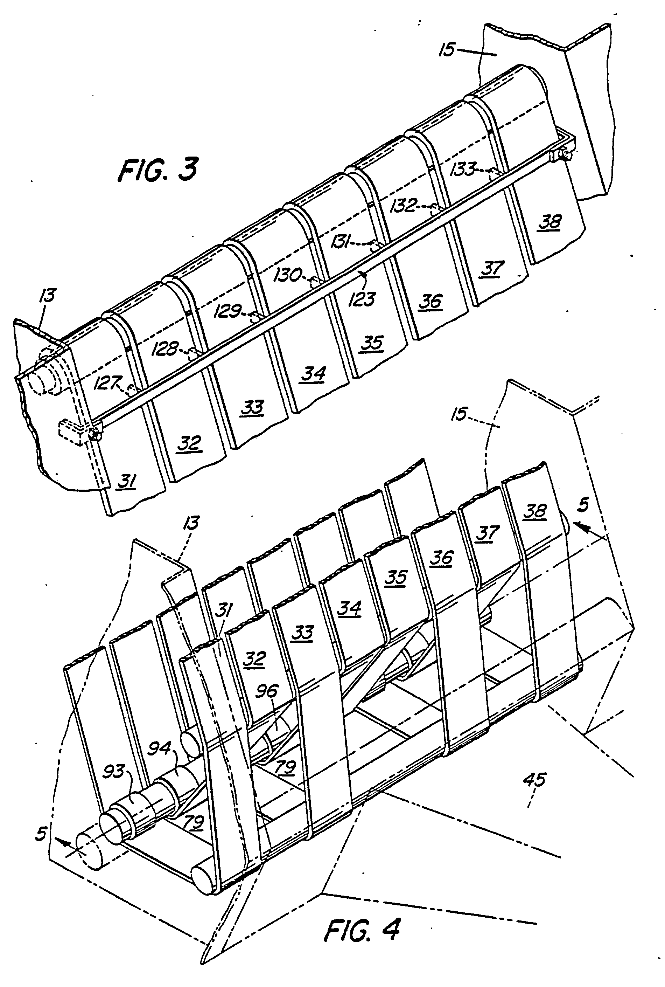

Die in Fig. 1 dargestellte Rundballenpresse weist einen Rahmen 10 mit einem Paar sich gegenüberliegender Seitenwände 13, 15, mehrere Walzen 18 bis 26, die drehbar an den Seitenwänden 13, 15 und sich zwischen diesen erstreckend montiert sind, eine Vielzahl endloser, nebeneinander gelegener Riemen 31 bis 38, die auf den Walzen 18 bis 26 aufliegen und zwischen den Seitenwänden 13, 15 einen ausdehnbaren Ballenpreßraum 40 zum Formen eines zylindrischen Ballens bilden, und einen Erntegutaufnehmer 39 zum Zuführen des Ernteguts vom Boden in den Ballenpreßraum 40 auf. Ein paar Leitbleche 42 (nur ein einziges ist gezeigt) ist an den jeweiligen Enden des Erntegutaufnehmers 39 angebracht. Der Rahmen 10 der Rundballenpresse wird von Rädern 41 getragen (lediglich ein einziges ist dargestellt) und von einem nicht gezeigten Ackerschlepper über eine Zugdeichsel 45 gezogen.

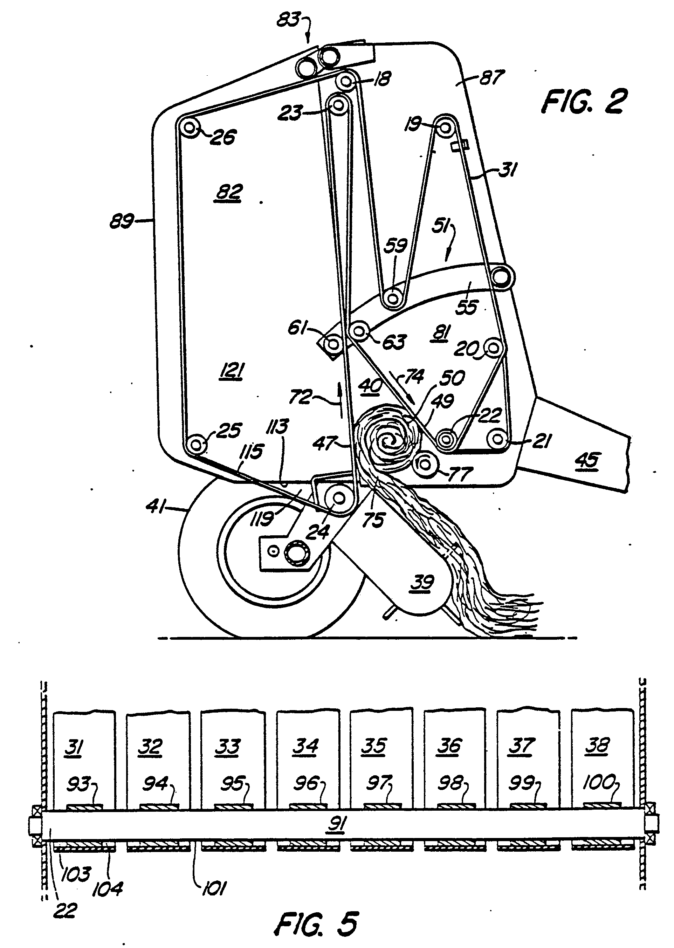

Die Riemen 31 bis 38 beinhalten ein Paar im wesentlichen emporgerichtete gegenüberliegende Teilstücke 47 und 49, die den Ballenpreßraum 40 bilden und sich zwischen einer Walze 61 und der Walze 24 bzw. zwischen einer Walze 63 und der Walze 22 erstrecken. Wie in Fig. 2 gezeigt, ist die Größe des Ballenpreßraumes 40 und die Länge der Teilstücke 47 und 49 durch eine Riemenspannvorrichtung 51 veränderbar, um sich dem beim Wickelvorgang sich vergrößernden Durchmesser des Ballens 50 anpassen zu können. Die Riemenspannvorrichtung 51 beinhaltet ein Paar Arme 53 und 55, die schwenkbar an einem Halter 57 befestigt sind, eine Riemenspannwalze 59, die zwischen den Armen 53 und 55 gehalten ist, und die beiden den Ballenpreßraum 40 begrenzenden Walzen 61 und 63, die zwischen den Armen 53 und 55 angeordnet sind. Die Riemenspannvorrichtung 51 ist auf jeder Seite der Rundballenpresse durch ein Paar Vorspannvorrichtungen 65 (nur eine ist in Fig. 1 gezeigt) vorgespannt, die jeweils einen Spannarm 67, der an dem einen Ende des Halters 57 befestigt ist, einen Hydraulikzylinder 69, einen Winkelhebel 71 und eine Feder 73, die zwischen dem Winkelhebel 71 und dem Spannarm 67 gelegen ist, aufweisen.

Aus Fig. 2 geht ferner hervor, daß das Erntegut durch einen offenen oder nicht eingeengten Einlaß 75 ohne nennenswerte Verdichtung von dem Erntegutaufnehmer 39 dem Ballenpreßraum 40 zuführbar ist. Der Einlaß 75 wird durch die untersten sich gegenüberliegenden, die Riemen führenden Walzen 24, 22, den Erntegutaufnehmer 39 und eine Abstreifwalze 77 begrenzt. Die Abstreifwalze 77 trägt zum anfänglichen Bilden des Ballenkerns bei, trägt teilweise das Gewicht des Ballens während seiner Bildung und streift Erntegut von dem Teilstück 49 ab, um den Verlust von Erntegut aus dem Ballenpreßraum 40 heraus zu verhindern bzw. zu vermindern.

Die Riemen 31 bis 38 werden durch einen herkömmlichen, die Walzen 19 und 22 antreibenden, nicht gezeigten Antrieb, der mit einer Zapfwelle des zum Ziehen der presse benutzten Ackerschleppers (nicht gezeigt) verbunden ist, in Richtung der Pfeile 72 und 74 in Umlauf versetzt. Die Riemen 31 bis 38 sind, wie aus den Figuren 2 und 4 hervorgeht, abwechselnd um die Walze 20 oder die Walze 21 geführt, um Öffnungen oder Abstände 79 zu bilden, durch die Erntegut austreten kann, bevor es die Walzen umwickeln oder den Aufbau von eingeschlossenem Erntegut in zu dem Ballenpreßraum 40 benachbarten Räumen wie dem Raum 81 verursachen kann.

Aus Fig. 1 ist ferner ersichtlich, daß jede Seitenwand 13 und 15 aus Vorderteilen 86 und 87 und rückwärtigen Teilen 88 und 89 gebildet wird. Die rückwärtigen Teile 88 und 89 und die Walzen 24 bis 26 bilden ein Ballenentladegatter 82. Dieses ist zum Auswerfen des Ballens 50 aus dem Ballenpreßraum 40, wenn er die gewünschte Ballengröße erreicht hat, um einen Schwenkpunkt 83 durch die Betätigung zweier Hydraulikzylinder 85 (lediglich einer ist ersichtlich) relativ zu den Vorderteilen 86, 87 drehbeweglich.

Ein Riemenführungsteil 123 (Fig. 1 und 3) ist zwischen den Seitenwänden 13 und 15 fest eingebaut und enthält eine Vielzahl Führungsleisten 127 bis 133, die sich jeweils zwischen den sich benachbarten Riemen 31 bis 38 erstrecken, um zu einer einwandfreien Riemenausrichtung und zu einem einwandfreien Riemenlauf auf den Walzen 18 bis 26 beizutragen.

Im Einsatz wird der Ballen beim Ziehen der Rundballenpresse über das Feld gebildet, wobei das in der Regel in einem Schwad auf dem Boden liegende Erntegut von dem Erntegutaufnehmer 39 aufgenommen und ohne merkliche Verdichtung durch den offenen Einlaß 75 nach oben in den Ballenpreßraum 40 gegeben wird. Das Erntegut wird dann von dem sich nach oben bewegenden Teilstück 47 erfaßt und beginnt sich dort im Uhrzeigerdrehsinn zu drehen (Fig. 2). Diese Drehbewegung wird zumindest später von dem sich nach unten bewegenden Teilstück 49 unterstützt. Sobald das Erntegut den untersten Abschnitt des Teilstückes 49 erreicht, wird es von der im Gegenuhrzeigerdrehsinn rotierenden Abstreifwalze 77 ergriffen, die ebenfalls die Drehbewegung des Ernteguts im Uhrzeigerdrehsinn unterstützt, wobei weiteres, durch den Einlaß 75 in den Ballenpreßraum eingespeistes Erntegut zur Bildung eines Ballenkerns erfaßt wird. Da beim weiteren Zuführen von Erntegut der Ballenkern im Durchmesser wächst, wird er durch die gespannten Riemen verdichtet, wobei die Spannung, die den Riemen durch die Riemenspannvorrichtung 51 und die Vorspannvorrichtung 65 auferlegt ist, ansteigt und letztlich die Arme 53 und 55 mit der Riemenspannwalze 59 und den Walzen 61, 63 im Uhrzeigerdrehsinn verschwenkt werden. Mit der Aufwärtsbewegung der Riemenspannwalze 59 und der Walzen 61 und 63 werden die Teilstücke 47 und 49 in ihrer wirksamen Länge verlängert und der Durchmesser des Ballenpreßraumes 40 dadurch vergrößert. Mit ansteigendem Ballendurchmesser vergrößert sich der Ballenpreßraum 40 weiter entgegen der Wirkung der die Riemen spannenden Federn 73 und der Hydraulikzylinder 69. Die Spannung der Riemen kann zusätzlich durch den Austausch eines Druckmediums zwischen dem oberen und unteren Ende der hierzu doppelt wirkend ausgebildeten Hydraulikzylinder 69 über ein einstellbares Druckbegrenzungsventil (nicht gezeigt) auch reguliert werden, um die Ballendichte zu variieren. Wenn der Ballen 50 seinen vorbestimmten Durchmesser erreicht hat, werden die Hydraulikzylinder 85 zum öffnen des Ballenentladegatters 82 und zum Ablegen des Ballens 50 auf den Boden betätigt.

Der Ballenpreßraum 40 weist Seiten auf, die im wesentlichen von den Riemen 31 bis 38 umschlossen werden. Hierbei sind die Riemen 31 bis 38 derart bemessen und voneinander entfernt, daß sie mindestens 80 % und vorzugsweise über 90 % des Bereichs zwischen den Seitenwänden 13 und 15 ab- bzw. bedecken. Die Abstände benachbarter Riemen und der außen liegenden Riemen 31 und 38 sind derart, daß lediglich ausreichend Raum für den Durchtritt der schmalen, leistenförmigen Führungsleisten, die zwischen aneinandergrenzenden Riemen und ggf. zwischen den außen liegenden Riemen 31 und 38 und den Seitenwänden 13, 15 anzuordnen sind, verbleibt. Die Führungsleisten helfen, einen einwandfreien Riemenlauf und eine einwandfreie Riemenausrichtung der Riemen auf den Walzen zu erhalten. Dadurch, daß der Ballenpreßraum im wesentlichen von den Riemen umfaßt wird, tritt erstens weniger Erntegut aus dem Ballenpreßraum aus, das sich sonst in dem Ballenpreßraum benachbarten Räumen ansammeln und dort zu Verstopfungen führen könnte, und wird zweitens erreicht, daß kleinere Abschnitte der Walzen dem Erntegut ausgesetzt sind, wodurch ein mögliches Aufwickeln von Erntegut auf den Walzen verringert wird.

Bei einem bevorzugten Ausführungsbeispiel mit sechs Riemen von je 17,8 cm Breite, einem Abstand zwischen den Riemen von 1,28 cm und einem Abstand der äußeren Riemen zu den Seitenwänden von jeweils 2,0 cm beträgt die Gesamtbreite zwischen den Seitenwänden 117 cm. Hierbei ist jede Führungsleiste 127 bis 133 0,5 cm stark. Mit Riemen dieser Größe und dem vorgegebenen Abstand zwischen den Seitenwänden werden ungefähr 91 % der Entfernung zwischen den Seitenwänden 13 und 15 überbrückt.

Bei einem weiteren bevorzugten Ausführungsbeispiel mit einem Abstand der Seitenwände zueinander von 156,5 cm, mit 8 Riemen von je 17,8 cm Breite, einem Abstand der Seitenwände 13, 15 zu den unmittelbar angrenzenden Riemen 31, 38 von 2,0 cm, einem Abstand jedes Riemens von dem unmittelbar angrenzenden Riemen von 1,45 cm und einer Stärke der Führungsleisten von 0,5 cm werden ungefähr 91 % der Entfernung zwischen den Seitenwanden durch die Riemen abgedeckt.

Bei einer derartigen Umfassung des Ballenpreßraumes bei der beschriebenen Rundballenpresse können Ballen aus verschiedensten Ernteprodukten (z. B. Heu, Stroh und anderem Halmoder Blattgut) bei fast jedem Feuchtigkeitsgehalt und unter weiteren Erntebedingungen bei einer verringerten Neigung zum Verstopfen oder Verklemmen des Ballenpreßraumes und zum Umwickeln der Walzen 18 bis 26 mit Erntegut gebildet werden.

Diese Ausbildung ermöglicht, daß Heu oder Gras mit einem Feuchtigkeitsgehalt von 10 % bis zu 70 % und 80 % gepreßt werden kann, so daß ungeschnittenes Gras, das einen Feuchtigkeitsgehalt zwischen 70 % und 80 % hat, unmittelbar nach dem Mähen preßbar ist. Dies hat sich z. B. in Gegenden wie Großbritannien als besonders zweckmäßig herausgestellt, in denen man Heu (z. B. Raygras) sofort nach dem Mähen preßt und den Ballen in einer Plastikhülle unterbringt, um Silage herzustellen. Mit den bisherigen Rundballenpressen war das Pressen von Heu bei Feuchtigkeitsgraden zwischen 25 % und 50 % gewöhnlich störungsbehaftet. Andererseits ist das Pressen von Heu und Stroh mit niedriger Feuchtigkeit mit herkömmlichen Rundballenpressen auch als Äußerst schwierig erkannt worden, weil das Erntegut dann dazu neigt, in kleine Teile zu zerbrechen und sich in den dem Ballenpreßraum benachbarten Räumen anzusammeln. Mit der hier beschriebenen Rundballenpresse kann derartiges Erntegut mit einer bedeutend verringerten Neigung zum Verstopfen gepreßt werden.

Es wird nunmehr auf die Fig. 2 und insbesondere auf die Figuren 4 und 5 Bezug genommen, die ein bevorzugtes Ausführungsbeispiel einer Rundballenpresse mit einer selbstreinigenden, den Antrieb übertragenden Walze 22 veranschaulichen.

Die Walze 22 wird von einem zylindrischen Kern 91 (z. B. aus Stahl) und Mitteln, um die Längskanten der Riemen 31 bis 38 außer Berührung mit einer Mantelfläche 101 des Kerns 91 zu halten, gebildet. Diese Mittel können Gummibüchsen 93 bis 100 sein, die auf die Mantelfläche 101 des Kerns 91 aufgeklebt sind.

Es ist auch denkbar, daß die Stützmittel durch jede andere Art erhöhter Oberflächen zum Tragen des mittleren Abschnitts oder Teile davon jedes Riemens derart, daß die Riemenkanten normalerweise außer Berührung mit dem Kern gehalten werden, gebildet werden können. Der Kern könnte etwa mit erhöhten Oberflächen einstückig gegossen oder auf andere Art hergestellt werden. Die erhöhten Oberflächen unter jedem Riemen können durchgehend oder unterbrochen sein.

Jede Gummibüchse 93 bis 100 ist derart auf dem Kern 91 angeordnet, daß sie unter dem jeweils zugehörigen Riemen 31 bis 38 liegt. Die Breite der Riemen 31 bis 38 und die Breite der darunterliegenden Gummibüchsen 93 bis 100 ist aber derart gewählt, daß jeder Riemen sich seitlich über die darunterliegende Gummibüchse erstreckt und dadurch ein Paar Fugen 103, 105 bildet, die von der Mantelfläche 101 des Kerns 91, der Innenfläche des Riemens und der äußeren Kante der Gummibüchse umrissen werden. Beispielsweise sind in einer bevorzugten Ausbildungsform die Riemen 17,8 cm und die Gummibüchsen 12,7 cm breit, die eine Fuge in einer Länge von ungefähr 2,5 cm ergeben. Die Stärke der Gummibüchse beträgt 0,32 cm, woraus sich eine Fuge von weniger als 3,2 mm in der Höhe (zwischen der Mantelfläche 101 und der Innenfläche des Riemens) ergibt, weil der überhängende Teil der Riemen dazu neigt, sich auf die Mantelfläche 101 zuzubiegen. Die Stärke der Gummibüchsen 93 bis 100 sollte ausreichend sein, um eine Fuge entstehen zu lassen und um diese zu erhalten. Die Stärke ist den verschiedenen Riemenwerkstoffen anzupassen.

Dadurch, daß auf der Walze 22 Gummibüchsen unter jedem Riemen liegen, ergibt sich eine bedeutend geringere Neigung für das Erntegut, sich um die Walze 22 zu wickeln. Ohne die Gummibüchsen stützt sich der Ballen zumindest während eines Teils des Ballenbildungsvorgangs auf der Walze 22 ab und drückt das Teilstück 49 gegen diese, so daß das Erntegut, das zwischen den Riemen 31 bis 38 von dem Ballenpreßraum 40 aus hindurchgelangt, in der Klemmstelle zwischen dem Teilstück 49 und der Walze 22 eingezwängt werden kann. Durch die gewählte Ausbildung der Fugen wird die Bildung einer Klemmstelle ganz oder zumindest teilweise vermieden, so daß das Erntegut wesentlich weniger dazu neigt, unter den Kanten der Riemen eingeklemmt und festgehalten zu werden. Wenn noch einiges Erntegut zwischen den Riemen 31 bis 38 hindurchgelangen sollte, kann es durch die Öffnungen 79, die sich aus der versetzten Anordnung der Riemen 31 bis 38 auf den Walzen 21, 22 ergeben, herausfallen. Es kommt hinzu, daß durch die ausgeschaltete oder zumindest sehr verringerte Neigung der Enden des Ernteguts, unter den Kanten der Riemen festgehalten zu werden, das Erntegut weniger aus dem in dem Ballenpreßraum geformten Ballen herausgezogen oder abgeschält wird und somit Erntegutverluste verringert werden. Durch die Verringerung der Wickelneigung des Ernteguts um die Walze 22, was bei allen Ernteprodukten und Erntebedingungen zu geringem oder gar keinem Riemenbruch und gutem Riemenlauf führt, trägt dieses Merkmal außerdem wesentlich zu einer störungsfreien Pressenarbeit bei. Dies ist besonders vorteilhaft beim Pressen von Ernteprodukten, wie Hochfeuchtigkeitsheu oder extremem Niederfeuchtigkeitsheu oder Stroh, bei dem eine große Neigung des Ernteprodukts besteht, sich um die Walzen anzusammeln und evtl. die Riemen zu verstopfen oder festzuhalten. Selbstverständlich können auch andere Walzen (z. B. Walze 61) als die Walze 22, die mit Ernteprodukten in Berührung kormen, mit Abstandsmitteln für die Riemenkanten ausgestattet werden.

In den Figuren 1 und 2 ist außerdem eine vorteilhafte Ausbildung der Rundballenpresse mit einem selbstreinigenden Ballenentladegatter 82 gezeigt. Dieses wird von den rückwärtigen Teilen 88 und 89 der Seitenwände 13 und 15 und den Walzen 24 bis 26 gebildet.

Die Walzen 24 und 25 sind in der Nähe der unteren Kanten 111 und 113 der rückwärtigen Teile 88 und 89 angebracht. Hierbei ist die Walze 24 unterhalb der unteren Kanten 111 und 113 am Rahmen 10 und die Walze 25 im Bereich des rückwärtigen unteren Endes der rückwärtigen Teile 88 und 89 angeordnet. Ein Teilstück 115 der Riemen 31 bis 38, das sich zwischen den Walzen 24 und 25 erstreckt, verläuft dann teilweise unter den unteren Kanten 111, 113 und bildet Öffnungen 117, 119 auf jeder Seite der Rundballenpresse. Diese führen in einen Raum 121, der von den Riementeilstücken, die sich um die Walzen 23 bis 26 erstrecken, und den rückwärtigen Teilen 88, 89 umschlossen wird. Während des Ballenbildungsvorgangs können Teile des Erntegutes u. U. aus dem Ballenpreßraum 40 in den Raum 121 gelangen, wenn es zwischen benachbarten Riemen 31 bis 38 hindurchfällt. Wäre keine Entnahme- oder Austrittsmöglichkeit gegeben, so würde das dort sich ansammelnde Erntegut in dem Raum 121 sich um die Walzen wickeln, was zu Riemenschäden führen kann, und letztlich diesen Raum verstopfen. Die besondere Anordnung der Öffnungen 117 und 119 bewirkt, daß das evtl. in den Raum 121 gelangende Erntegut während des Betriebes durch die Riemenbewegung einschließlich der Riemenschwingungen zu den Seiten bewegt wird und dort von selbst herausfällt. Etwaiges, noch in dem Raum verbleibendes Restgut wird in keinem Falle die Arbeitsleistung der Rundballenpresse beeinträchtigen. Die Öffnungen 117 und 119 sind dabei so vorgesehen, daß sie sich mit seitlichem Abstand neben den Rädern 41 befinden, so daß eine Unfallgefahr durch die umlaufenden Riemen ganz oder zumindest withgehend ausgeschaltet ist. Bei bestimmten Rundballenpressenausbildungen kann es aber auch zwechmäßig sein, die Öffnungen an anderen, auch einen manuellen Zugang ermöglichenden Stellen vorzusehen.

**Patentansprüche**

1. Rundballenpresse mit einem einen Guteinlaß (75) aufweisenden Ballenpreßraum (40), der aus umlaufenden, über Walzen (18 bis 26) geführten endlosen Riemen (31 bis 38) gebildet wird, wobei Teile (49, 47) der Riemen (31 bis 38) beim Wickelvorgang mit dem in zylindrische Ballen (50) zu formenden Gut in Berührung kommen, dadurch gekennzeichnet, daß bei mindestens einer der die Riemen (31 bis 38) führenden Walzen (18 bis 26) die Seitenkanten der Riemen (31 bis 38) im Umlaufbereich um die Walze (18 bis 26) einen Abstand (103, 104) zur Walzenoberfläche aufweisen.

2. Rundballenpresse nach Anspruch 1, dadurch gekennzeichnet, daß bei mindestens einer der die Riemen (31 bis 38) führenden Walzen (22) die mit dem Gut in Berührung kommenden Teile (49, 47) der Riemen (31 bis 38) nur in ihrem Mittenbereich auf der Walze (22) geführt sind.

3. Rundballenpresse nach Anspruch 1 oder 2, dadurch gekennzeichnet, daß mindestens eine der Walzen (22) in ihrem den Mittenbereich der Riemen (31 bis 38) führenden Bereich einen größeren Durchmesser aufweist als zwischen den Seitenkanten benachbarter Riemen (31 bis 38).

4. Rundballenpresse nach Anspruch 3, dadurch gekennzeichnet, daß im Mittenbereich austauschbare Distanzhalter (93 bis 100) vorgesehen sind.

5. Rundballenpresse nach einem oder mehreren der vorgenannten Ansprüche, dadurch gekennzeichnet, daß die Distanzhalter Büchsen (93 bis 100) sind.

6. Rundballenpresse nach einem oder mehreren der vorgenannten Ansprüche, dadurch gekennzeichnet, daß die Riemen (31 bis 38) zirka 80 % bis 90 % oder mehr der Breite des Ballenpreßraums (40) überdecken.

7. Rundballenpresse nach einem oder mehreren der vorgenannten Ansprüche, dadurch gekennzeichnet, daß die Büchsen (93 bis 100) aus Gummi bestehen.

8. Rundballenpresse nach einem oder mehreren der vorgenannten Ansprüche, dadurch gekennzeichnet, daß die Büchsen (93 bis 100) einen hohen Reibwert zur Antriebsübertragung aufweisen.

9. Rundballenpresse nach einem oder mehreren der vorgenannten Ansprüche, mit einer stationären, antreibbaren Walze (22), dadurch gekennzeichnet, daß die Distanzhalter (93 bis 100) auf dieser Walze (22) angeordnet sind.

10. Rundballenpresse nach Anspruch 1 oder 2, mit Riemen, die eine dem Ballenpreßraum (40) zugewandte, ebene Oberflache aufweisen, dadurch gekennzeichnet, daß die Riemen (31 bis 38) in ihrem Mittenbereich eine größere Stärke als in ihrem Seitenbereich aufweisen.

## Claims

1. A round baler comprising a baling chamber (40) which has a material inlet (75) and which is formed from circulating endless belts (31 to 38) which are guided over rollers (18 to 26), wherein parts (49, 47) of the belts (31 to 38) come into contact with the material which is to be formed into cylindrical bales (50) in the winding operation, characterised in that in the case of at least one of the rollers (18 to 26) guiding the belts (31 to 38), the side edges of the belts (31 to 38), in the region in which they pass around the rollers (18 to 26), are at a spacing (103, 104) from the roller surface.

2. A round baler according to claim 1 characterised in that, in the case of at least one of the rollers (22) guiding the belts (31 to 38), the parts (49, 47) of the belts (31 to 38), which come into contact with the material, are guided only in their middle region on the roller (22).

3. A round baler according to claim 1 or claim 2 characterised in that at least one of the rollers (22), in its region which guides the middle region of the belts (31 to 38), is of larger diameter than between the side edges of adjacent belts (31 to 38).

4. A round baler acoording to claim 3 characterised in that replaceable spacer members (93 to 100) are provided in the middle region.

5. A round baler according to one or more of the preceding claims characterised in that the spacer members are sleeves (93 to 100).

6. A round baler according to one or more of the preceding claims characterised in that the belts (31 to 38) cover around 80 to 90% or more of the width of the baling chamber (40).

7. A round baler according to one or more of the preceding claims characterised in that the sleeves (93 to 100) consist of rubber.

8. A round baler according to one or more of the preceding claims characterised in that the sleeves (93 to 100) have a high coefficient of friction for the transmission of drive.

9. A round baler according to one or more of the preceding claims comprising a stationary, drivable roller (22), characterised in that the spacer members (93 to 100) are arranged on said roller (22).

10. A round baler according to claim 1 or claim 2 comprising belts which have a flat surface which is towards the baling chamber (40), characterised in that the belts (31 to 38) are of greater thickness in their middle region than in their side region.

## Revendications

1. Presse à balles cylindriques ou rondes comportant une chambre (40) de formation des balles présentant un orifice (75) d'entrée des produits, cette chambre étant formée par des bandes ou courroies sans fin (31 à 38) animées d'un mouvement de circulation et guidées sur des rouleaux ou cylindres (18 à 26), des parties (49,47) des bandes ou courroies (31 à 38) venant, lors de l'opération de formation des balles, en contact avec les produits destinés à former les balles rondes (50), caractérisée en ce que, pour l'un au moins des rouleaux (18 à 26) guidant les bandes ou courroies (31 à 38), les bords latéraux des bandes ou courroies (31 à 38) sont dans la zone de passage autour du rouleau (18 à 26) écartés (103, 104) de la surface de ce rouleau.

2. Presse à balles rondes suivant la revendication 1, caractérisée en ce que, pour l'un au moins des rouleaux (22) guidant les bandes ou courroies (31 à 38), les parties (49, 47) des bandes ou courroies (31 à 38) venant en contact avec les produits de récolte ne sont guidées sur le rouleau (22) que dans leur zone médiane.

3. Presse à balles rondes suivant la revendication 1 ou 2, caractérisée en ce que l'un au moins des rouleaux (22) présente, dans sa partie guidant la partie médiane des bandes ou courroies (31 à 38), un plus grand diamètre que dans sa partie située entre les bords latéraux de bandes ou courroies voisines (31 à 38).

4. Presse à balles rondes suivant la revendication 3, caractérisée en ce qu'il est prévu, dans la partie ou zone médiane, des éléments d'écartement interchangeables (93 à 100).

5. Presse à balles rondes suivant une ou plusieurs des revendications précédentes, caractérisée en ce que les éléments d'écartement sont constitués par des douilles ou bagues (93 à 100).

6. Presse à balles rondes suivant une ou plusieurs des revendications précédentes, caractérisée en ce que les bandes ou courroies (31 à 38) recouvrent environ de 80 à 90% ou plus de la largeur de la chambre (40) de formation des balles.

7. Presse à balles rondes suivant une ou plusieurs des revendications précédentes, caractérisée en ce que les douilles ou bagues (93 à 100) sont en caoutchouc.

8. Presse à balles rondes suivant une ou plusieurs des revendications précédentes, caractérisée en ce que les douilles ou bagues (93 à 100) ont un coefficient de friction élevé pour la transmission de l'effort d'entraînement.

9. Presse à balles rondes suivant une ou plusieurs des revendications précédentes, comportant un rouleau stationnaire (22) pouvant être entraîné positivement, caractérisée en ce que les éléments d'écartement (93 à 100) sont disposés sur ce rouleau (22).

10. Presse à balles rondes suivant la revendication 1 ou 2, comportant des bandes ou courroies qui sont munies d'une surface plane orientée vers la chambre (40) de formation des balles, caractérisée en ce que les bandes ou courroies (31 à 38) présentent, dans leur partie ou zone médiane, une épaisseur plus grande que dans leurs parties latérales.

FIG. 1

FIG. 3

FIG. 4

FIG. 2

FIG. 5

5